# EUROPEAN PATENT APPLICATION

(11) **EP 0 755 000 A2**
(43) Date of publication of application: **22.01.1997**
(21) Application number: 96111451.9
(22) Date of filing: 16.07.1996
(51) Int. Cl.: G06F 9/355

(54) **Microcomputer and address generation method**

(30) Priority: 18.07.1995 JP 181366/95
(71) Applicant: NEC CORPORATION, Tokyo (JP)
(72) Inventor: Tokieda, Yusuke, Minato-ku, Tokyo (JP)
(74) Representative: Baronetzky, Klaus, Dipl.-Ing.

(57) **Abstract**

The CPU 1-1 comprises an address space where a high limit address and a low limit address are contiguous. Zero value data stored in a zero register 1-11 is used as a base address, and 32 bit zero data is read from the zero register 1-11. On the other, the 16 bit data (disp) 1-6 for specifying a relative address is code-extended to 32 bits by the code extension means 1-12. The 32 bit zero value data read from the zero register 1-11 and the data disp for specifying the relative address extended to 32 bits are added together by the 32 bit adder 1-7 so as to generate an address 1-8 of the access destination.

## Description

### BACKGROUND OF THE INVENTION

This invention relates to a microcomputer. More specifically, to a single chip microcomputer which comprises memories, peripheral circuits and the like.

Conventionally, this type of microcomputers have been used for controlling various devices. Especially, a single chip microcomputer usually comprises memories such as a Read Only Memory (referred to as ROM, hereinafter), a Random Access Memory (referred to as RAM, hereinafter) and peripheral circuits such as a timer and a serial interface as well as a central processing unit (referred to as CPU, hereinafter), and is built into various small devices.

The CPU in the single chip microcomputer accesses specified addresses assigned in the built-in ROM, the built-in RAM, and the peripheral circuits when accessing the built-in ROM, the built-in RAM, and peripheral circuits.

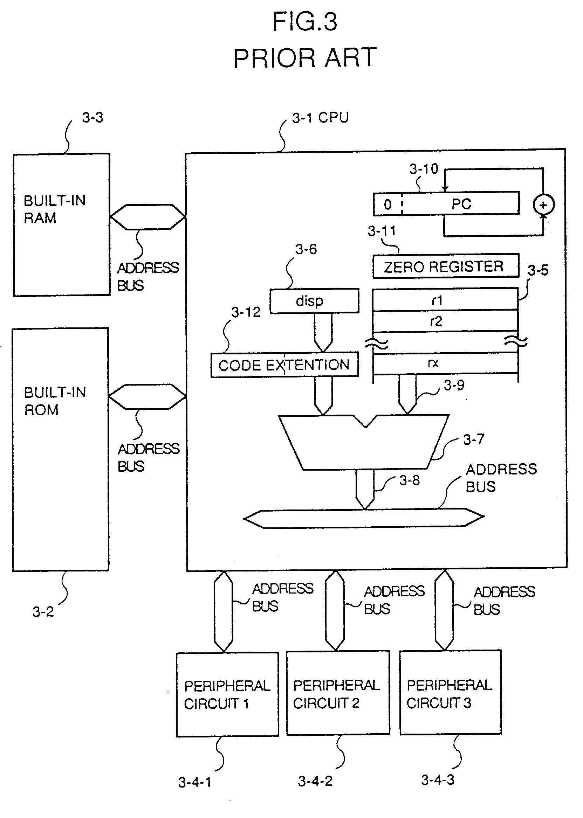

For example, Fig. 3 shows a construction of addressing of memories and peripheral circuits, etc. in a conventional microcomputer.

As shown in Fig. 3, a conventional microcomputer comprises CPU 3-1 which has an address space where a high limit address and a low limit address are contiguous, 32 KByte built-in ROM 3-2 accessed by the CPU 3-1, 2 KByte built-in RAM 3-3, and peripheral circuits 3-4-1 to 3-4-3.

Moreover, the CPU 3-1 comprises addressing means for assigning to access a 32 KByte built-in ROM 3-2, a 2 KByte built-in RAM 3-3 and a peripheral circuits 3-4-1 to 3-4-3 to specified addresses of an address space. The addressing means comprises 32 bit general registers (r1 to rx) 3-5 where a base address value 3-9 is set, code extension means 3-12 for extending 16 bit data (disp) 3-6 specifying a relative address to a bit width corresponding to the address space using a code bit signal, and a 32 bit adder 3-7 for inputting an output of the code extension means 3-12 and one output from the general registers (r1 to rx) 3-5, and outputting specified address 3-8.

When the 32 KByte built-in ROM 3-2, the 2 KByte built-in RAM 3-3, and the peripheral circuits 3-4-1 to 3-4-3 are accessed, program counter (PC) 3-10 of the CPU 3-1 and a zero register 3-11 serving as a read-only register for zero value data of the CPU 3-1 are not comprised as the components of addressing means.

When accessing the 32 KByte built-in ROM 3-2, the 2 KByte built-in RAM 3-3, and the peripheral circuits 3-4-1 to 3-4-3, the CPU 3-1 executes the following processing to generate addresses.

First, the CPU sets a base address value 3-9 with a command such as 'mov' in order to use the 1 register in the 32 bit general registers (r1 to rx) 3-5 as a pointer.

In executing an access instruction to the built-in ROM 3-2, the built-in RAM 3-3, and the peripheral circuits 3-4-1 to 3-4-3, when a register where a base address of the general register (rx) 3-5 is set as a pointer is selected, the relative address 16 bit data (disp) 3-6 to specify the access instruction is code extended to 32 bit and the code extended data and the base address value 3-9 and added by the adder 3-7, and a destination address 3-8 is generated.

Data access can be executed in a 4 GByte space expressed in 32 bits. An address calculation larger than 32 bits is ignored, and address 00000000H and address FFFFFFFFH are contiguous, and it wraparounds on the border.

Program space is determined according to the width of the program counter (PC) 3-10. The 32 bit program counter (PC) 3-10 is reset to zero for initialization and incremented by +1.

Address 00000000H and address FFFFFFFFH are contiguous and, it wraparounds in the area.

As explained using Fig. 3, when accessing the built-in ROM, the built-in RAM, and the peripheral circuits, the conventional computer requires to set an address to a general register for addressing an access to a specific address assigned to the built-in ROM, the built-in RAM, and the peripheral circuits. And at least one general register needed to be assigned for a dedicated use for a pointer (base address). The use of a general register as a dedicated register for a pointer (base address) has significantly reduced the general register's efficiency.

Furthermore, a general register is also used by a compiler other than used to store address data, read data, and write data, therefore the efficient use of limited number of general registers is necessary.

Moreover, a program capacity required to set the base address to the general register on the program has been one of factors to oppress a limited storage capacity of a memory for the program.

Especially, an RISC type microcomputer requires a larger program capacity because it executes programming by combining a few simple commands. Therefore it's critical to manage to put the program capacity in the limited capacity of the memory.

A single chip microcomputer built into a device must store a required program in an internal memory such as a built-in ROM. Therefore it's critical to reduce the required capacity of the program.

### SUMMARY OF THE INVENTION

It is an object of the present invention to provide arts for the aforementioned problems.

It is another object of the present invention to provide an art for reducing a required memory capacity for the program to increase the use efficiency of a general register.

The objects of the present invention are achieved by a microcomputer comprising a central processing unit having an address space where a high limit address and a low limit address wraparound, and storage means and a peripheral circuit that are addressed in the address space and accessed by the central processing unit, wherein the central processing unit comprises: a read-only register for storing base address data; code extension means for extending relative address data of at least one of the storage means and the peripheral circuit to a bit width corresponding to the address space based on a code bit signal; and operation means for operating on base address data read from the register and data extended by the code extension means and generating addresses of the storage means and the peripheral circuit.

The present invention uses a read only register as a register for a base address, so it is not necessary to keep a general register for a pointer.

In addition, in the present invention, it is not necessary to keep a general register for a pointer by using zero value data read only register in a CPU as a register for a base address. Furthermore, all hardware resources can be accessed with a construction that maps all hardware resources such as memories and peripheral circuits near the address 0 using high limit and low limit wraparound of the program address space and the data address space of the CPU.

As aforementioned, the present invention improves efficiency for uses of general registers, reduces memory capacity needed by a program and offers the reduction of memory capacity for operation of the other parts of the microcomputer.

### BRIEF DESCRIPTION OF THE DRAWINGS

This and other objects, features and advantages of the present invention will become more apparent upon a reading of the following detailed description and drawings, in which:
Fig. 1 is a block diagram showing a construction of a microcomputer of the present embodiment;
Fig. 2 is a figure showing a memory map on the microcomputer of the present embodiment;
Fig. 3 is a block diagram showing a construction of the microcomputer of the prior art.

### DESCRIPTION OF THE PREFERRED EMBODIMENTS

An embodiment of the present invention is described referring to the drawings.

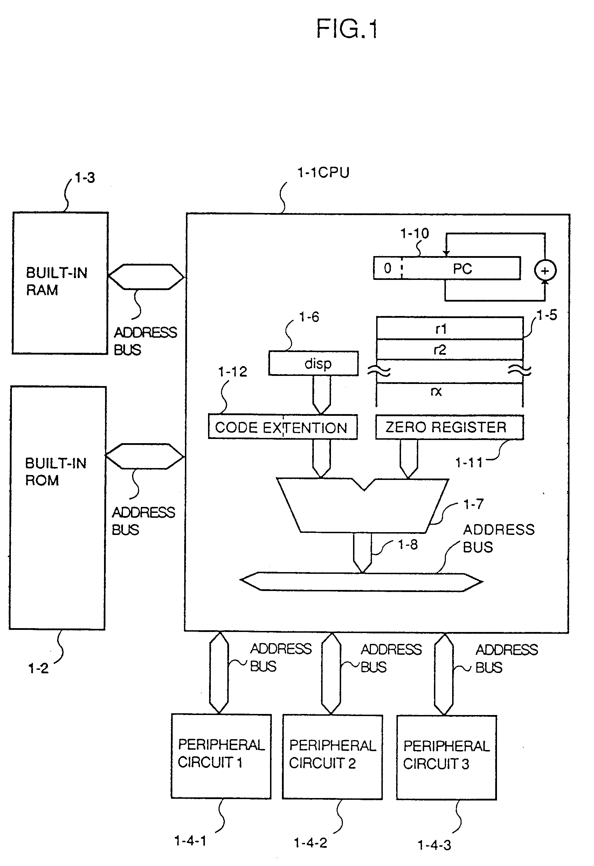

Fig. 1 is a block diagram showing a construction of a microcomputer of the present embodiment.

The microcomputer of the present embodiment comprises a CPU 1-1 including an address space where a high limit address and a low limit address are contiguous and a 32 KByte built-in ROM 1-2 accessed by the CPU 1-1, and a 2 KByte built-in RAM 1-3 and peripheral circuits 1-4-1 to 1-4-3. The CPU 1-1, the built-in ROM 1-2, the built-in RAM 1-3, and the peripheral circuits 1-4-1 to 1-4-3 are constructed as a single chip.

The CPU 1-1 comprises addressing means for assigning the 32 KByte built-in ROM 1-2, the 2 KByte built-in RAM 1-3, and the peripheral circuits 1-4-1 to 1-4-3 to a specified address in the address space respectively to access them. This addressing means comprises a zero register 1-11 that is a read only register for zero value data in the CPU 1-1, code extension means 1-12 for extending 16 bit data (disp) 1-6 to a bit width corresponding to the address space using a code bit signal, and a 32 bit adder 1-7 for outputting a specified address 1-8 by adding the code extension means 1-12 and the zero register 1-11 together.

When the 32 KByte built-in ROM 1-2, the 2 KByte built-in RAM 1-3, and the peripheral circuits 1-4-1 to 1-4-3 are accessed, the addressing means does not comprise a program counter (PC) 1-10 and a 32 bit general register (r1 to rx) 1-5 of the CPU 1-1.

When accessing the 32 KByte built-in ROM 1-2, the 2 KByte built-in RAM 1-3, and the peripheral circuits 1-4-1 to 1-4-3, the CPU 1-1 generates an address as follows:

First, the zero value data stored in the zero register 1-11 is used as a base address so as to read the 32 bit zero value data from the zero register 1-11. The 16 bit data (disp) 1-6 for specifying a relative address is code-extended to 32 bits by the code extension means 1-12, and then the 32 bit zero value data read and the data disp for specifying the relative address extended to 32 bits are added together by the 32 bit adder 1-7 so as to generate an address 1-8 of the access destination.

The address 1-8 to be generated can take one of values expressed in the 16 bit data (disp) 1-6, that is, in 64 KByte around address zero, and an address calculation exceeding 32 bits is then ignored. As a result address 00000000H and address FFFFFFFFH become contiguous and a data access wraparounds on the border.

Necessary address area for addressing built-in hardware resources such as the built-in ROM 1-2, the built-in RAM 1-3, and the peripheral circuits 1-4-1 to 1-4-3 typically requires within 64 KByte or less as explained in the present embodiment.

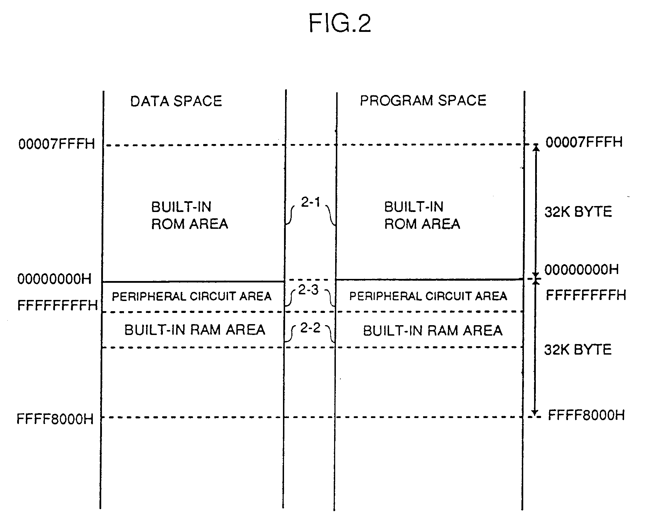

Therefore, addresses of the built-in ROM 1-2, the built-in RAM 1-3, and the peripheral circuits 1-4-1 to 1-4-3 can be mapped into an address area 2-1 to 2-3 within zero address ± 32 KByte and addressed. Fig. 2 is the map showing an example of the memory map.

On the other, the program space is determined according to the width of the program counter (PC) 1-10. In the present embodiment the upper 8 bits are fixed on 'zero' in the hardware. Therefore the program counter (PC) 1-10 is reset to zero for initialization and incremented by +1. As a result the lower 24 bit area, that is, 16 MByte area can be accessed. In this case, a carry and a borrow from 24 bits to 23 bits are then ignored. As a result address 00000000H and address 00FFFFFFH become contiguous address, and the data access can wraparound in this area.

In the present embodiment above-mentioned the zero value data stored in the zero register 1-11 as the base address, that is, the low limit address is used as the base address, and the read only register storing the high limit address as the base address, for example, the data of FFFFFFFFH, can be used so as to assign the address FFFFFFFFH to the high limit address.

In this case the address 00000000H and the address FFFFFFFFH also become contiguous address, and the data access wraparounds on the border. As a result the address of the built-in hardware resources such as the built-in ROM 1-2, the built-in RAM 1-3, and the peripheral circuits 1-4-1 to 1-4-3 can be assigned to the address area within the address FFFFFFFFH ± 32 KByte.

## Claims

1. A microcomputer comprising a central processing unit(1-1) having an address space where a high limit address and a low limit address wraparound, and storage means(1-2, 1-3) and a peripheral circuit(1-4-1, 1-4-2, 1-4-3) that are addressed in said address space and accessed by said central processing unit, wherein
said central processing unit(1-1) comprises:
a read-only register(1-11) for storing base address data;
code extension means(1-12) for extending relative address data of at least one of said storage means(1-2, 1-3) and said peripheral circuit(1-4-1, 1-4-2, 1-4-3) to a bit width corresponding to said address space based on a code bit signal; and
operation means(1-7) for operating on base address data read from said register(1-11) and data extended by said code extension means and generating at least one address of said storage means and said peripheral circuit.

2. The microcomputer of claim 1, characterized in that said register(1-11) comprises means for storing said high limit address as said base address.

3. The microcomputer of claim 1, characterized in that said register(1-11) comprises means for storing said low limit address as said base address.

4. The microcomputer of claim 1, characterized in that said register(1-11) comprises means for storing zero value data as said base address.

5. The microcomputer of any of claim 1 to 4, comprising means for assigning said addresses of said storage means(1-2, 1-3) and said peripheral circuit(1-4-1, 1-4-2, 1-4-3) to an address area in which center said base address stored in said register is located.

6. The microcomputer of any of claim 1 to 5, characterized in that said central processing unit(1-1), said storage means(1-2, 1-3) and said peripheral circuit(1-4-1, 1-4-2, 1-4-3) are constructed in a single chip.

7. A microcomputer comprising a central processing unit(1-1) having an address space where a high limit address and a low limit address wraparound and said low limit address value is zero, and storage means(1-2, 1-3) and a peripheral circuit(1-4-1, 1-4-2, 1-4-3) that are addressed in said address space and accessed by said central processing unit(1-1), wherein
said central processing unit(1-1) comprises:
a read-only register(1-11) for storing a zero value data as a base address data;
code extension means(1-12) for extending relative address data of at least one of said storage means(1-2, 1-3) and said peripheral circuit(1-4-1, 1-4-2, 1-4-3) by a bit width corresponding to said address space based on a code bit signal; and
operation means(1-7) for operating on said zero value data read from said register(1-11) and said relative address data extended by said code extension means(1-12) and generating at least one address of said storage means and said peripheral circuit.

8. The microcomputer of claim 7, comprising means for assigning said addresses of said storage means(1-2, 1-3) and said peripheral circuit(1-4-1, 1-4-2, 1-4-3) to an address area in which center said base address stored in said register is located.

9. The microcomputer of claim 7 or claim 8, characterized in that said central processing unit(1-1), said storage means(1-2, 1-3) and said peripheral circuit(1-4-1, 1-4-2, 1-4-3) are constructed in a single chip.

10. A microcomputer comprising a central processing unit(1-1) having an address space where a high limit address and a low limit address wraparound, and storage means(1-2, 1-3) and a peripheral circuit(1-4-1, 1-4-2, 1-4-3) that are addressed in said address space and accessed by said central processing unit(1-1), wherein
said central processing unit(1-1) comprises:
a read-only register(1-11) for storing said high limit address data as a base address data;
code extension means(1-12) for extending relative address data of at least one of said storage means(1-2, 1-3) and said peripheral circuit(1-4-1, 1-4-2, 1-4-3) by a bit width corresponding to said address space based on a code bit signal; and
operation means(1-7) for operating on said high limit address data read from said register(1-11) and said relative address data extended by said code extension means(1-12) and generating at least one address of said storage means and said peripheral circuit.

11. The microcomputer of claim 10, comprising means for assigning said addresses of said storage means(1-2, 1-3) and said peripheral circuit(1-4-1, 1-4-2, 1-4-3) to an address area in which center said base address stored in said register(1-11) is located.

12. The microcomputer of claim 10 or claim 11, characterized in that said central processing unit(1-1), said storage means(1-2, 1-3) and said peripheral circuit(1-4-1, 1-4-2, 1-4-3) are constructed in a single chip.

13. Address generation method for generating addresses for a central processing unit to access storage means and a peripheral circuit being characterized by comprising steps of:
generating an address space where a base address is a low limit address, and a high limit address and said low limit address wraparound;
reading said base address data;
reading at least one of relative address data of said storage means and said peripheral circuit;
extending said relative address data to a bit width corresponding to said address space; and
operating on said base address data and said relative address data extended, and generating at least one address of said storage means and said peripheral circuit.

14. The address generation method of claim 13, further being characterized by comprising a step of assigning said addresses of said storage means and said peripheral circuit to said address area in which center said base address is located.

15. The address generation method of claim 13 or claim 14, further being characterized by comprising a step of assigning a zero value as said base address.

16. Address generation method for generating addresses for a central processing unit to access storage means and a peripheral circuit being characterized by comprising steps of:
generating an address space where a base address is a high limit address, and a high limit address and said low limit address wraparound;
reading said base address data;
reading at least one of relative address data of said storage means and said peripheral circuit;
extending said relative address data to a bit width corresponding to said address space; and
operating on said base address data and said relative address data extended, and generating at least one address of said storage means and said peripheral circuit.

17. The address generation method of claim 16, further being characterized by comprising a step of assigning said addresses of said storage means and said peripheral circuit to said address area in which center said base address is located.
